# EUROPÄISCHE PATENTSCHRIFT

(11) **EP 2 142 821 B1**
(45) Veröffentlichungstag und Bekanntmachung des Hinweises auf die Patenterteilung: **15.08.2018**
(21) Anmeldenummer: 08748793.0
(22) Anmeldetag: 06.05.2008
(51) Int. Cl.: F16F 13/14

(54) **HYDRAULISCH DÄMPFENDE ELASTOMERBUCHSE**
HYDRAULICALLY DAMPING ELASTOMERIC BUSHING
DOUILLE ÉLASTOMÈRE À AMORTISSEMENT HYDRAULIQUE

(30) Priorität: 10.05.2007 DE 102007022410
(43) Veröffentlichungstag der Anmeldung: 13.01.2010
(73) Patentinhaber: BOGE Elastmetall GmbH, 49401 Damme (DE); AUDI AG, 85045 Ingolstadt (DE)
(72) Erfinder: SCHNAARS, Wolfgang, 49084 Osnabrück (DE); CONRAD, Thomas, 91757 Treuchtlingen (DE)
(74) Vertreter: Bossmeyer, Jörg Peter
(86) Internationale Anmeldenummer: PCT/DE2008/050011
(87) Internationale Veröffentlichungsnummer: WO 2008/138332

(56) Entgegenhaltungen:
- DE-A1- 19 937 714
- JP-A- 2003 278 823
- US-A1- 2007 235 912

## Beschreibung

Die Erfindung betrifft eine hydraulisch dämpfende Elastomerbuchse, das heißt ein elastomeres Buchsenlager nach dem Oberbegriff des Anspruchs 1, dessen hydraulisches Dämpfungssystem vorzugsweise für den Einsatz zur Lagerung der Achsträger eines Kraftfahrzeugs vorgesehen ist.

Bekannte elastomere Buchsenlager beziehungsweise Gummibuchsen mit hydraulischer Dämpfung bestehen aus einem in der Regel metallischen, zumeist im Wesentlichen zylinderförmigen Innenteil, einem konzentrisch zum Innenteil angeordneten, mit ihm durch Vulkanisation verbundenen elastomeren Lagerkörper und einer das Innenteil mit dem Lagerkörper aufnehmenden Außenhülse. Durch eine entsprechende Außenkontur des elastomeren Lagerkörpers sind zwischen diesem und der Außenhülse mindestens zwei Kammern zur Aufnahme eines elastomeren Dämpfungsmittels ausgebildet, welche über einen Dämpfungsmittelkanal miteinander verbunden und in der Umfangsrichtung durch sich in radialer Richtung erstreckende Stege des Lagerkörpers räumlich getrennt sind. Die Dämpfungsmittelkammern und der sie verbindende Kanal bilden ein die radiale Dämpfungswirkung des Lagers im Bereich der Kammern unterstützendes hydraulisches Dämpfungssystem. Entsprechend aufgebaute Hydrobuchsen sind beispielsweise aus der DE 38 18 287 A1 und der DE 102 13 627 A1 bekannt.

Nach dem Stand der Technik ist es üblich, entsprechende Buchsenlager nach dem Einfügen des aus dem Innenteil und dem Lagerkörper gebildeten Gummi-Metall-Teils in die Außenhülse durch eine Reduzierung ihres Außendurchmessers zu kalibrieren. Hierdurch werden das Elastomer des Lagerkörpers mit einer Vorspannung beaufschlagt und die hydraulische Dämpfung des Lagers erhöht. Aufgrund des dabei in den Kammern beziehungsweise in dem von ihnen aufgenommenen Dämpfungsmittel erzeugten

Überdrucks werden jedoch die, die Kammern in der axialen Richtung begrenzenden Blähwände einer erhöhten Beanspruchung ausgesetzt, wodurch sich die Standfestigkeit beziehungsweise die Dauerhaltbarkeit der Lager in nachteiliger Weise verringert. Dennoch sind die auf diese Weise erreichbaren Federratenverhältnisse zwischen einerseits der über die Stege verlaufen radialen Hauptbelastungsrichtung des Lagers und seiner anderen, über die Kammern verlaufenden Hauptbelastungsrichtung sowie andererseits der über die Stege verlaufen radialen Hauptbelastungsrichtung und der axialen Richtung des Lagers vergleichsweise beschränkt, da eine größere Aufspreizung der Federraten in nicht mehr hinnehmbarer Weise zu Lasten der Dauerhaltbarkeit ginge. Bei einer gleichzeitig vertretbaren Dauerhaltbarkeit betragen die Federratenverhältnisse aus dem Stand der Technik bekannter hydraulisch dämpfender Gummibuchsen ca. 5:1 radial über die, die Kammern trennenden Stege zu radial über die Kammern (in Bezug auf Achsträgerlager: Fahrzeugquerrichtung zu Fahrzeuglängsrichtung) beziehungsweise ca. 6:1 radial über die Stege zu axial (in Bezug auf Achsträgerlager: Fahrzeugquerrichtung zu Fahrzeughochrichtung). Im Hinblick auf unterschiedliche Einsatzfälle und einen dabei möglichst guten Fahrkomfort sind jedoch höhere Federratenverhältnisse in vielen Fällen durchaus wünschenswert.

Die JP 2003 278823 A beschreibt ein Verfahren zum Herstellen einer hydraulisch dämpfenden Elastomerbuchse, die ein metallisches Innenteil, einen mit dem Innenteil fest verbundenen und dieses umringenden elastomeren Lagerkörper, einen das Innenteil umringenden und mit dem Lagerkörper durch Vulkanisation fest verbundenen Käfig und eine den aus dem Innenteil, dem Lagerkörper und dem Käfig gebildeten Unterzusammenbau umringende Außenhülse aufweist, wobei zwischen dem Lagerkörper und der Außenhülse zwei einander gegenüberliegende und mit Flüssigkeit gefüllte Kammern vorgesehen sind, die über einen an der Innenumfangsfläche der Außenhülse vorgesehenen Kanal miteinander verbunden sind.

Aufgabe der Erfindung ist es, ein gattungsgemäßes hydraulisch dämpfendes Buchsenlager so auszubilden, dass für dieses bei hoher Dauerbelastbarkeit gegenüber dem Stand der Technik höhere Federratenverhältnisse bezüglich einer über die Stege verlaufenden radialen Hauptbelastungsrichtung und sowohl seiner axialen, als auch seiner anderen, über die Kammern verlaufenden radialen Hauptbelastungsrichtung erreicht werden.

Die Aufgabe wird durch ein hydraulisch dämpfendes Buchsenlager mit den Merkmalen des Hauptanspruchs gelöst. Vorteilhafte Aus- beziehungsweise Weiterbildungen der Erfindung sind durch die Unteransprüche gegeben. Das zur Lösung der Aufgabe vorgeschlagene elastomere Buchsenlager mit hydraulischer Dämpfung besteht, wie grundsätzlich bekannt, aus einem metallischen Innenteil, einem das Innenteil vorzugsweise konzentrisch umgebenden elastomeren Lagerkörper mit einem darin einvulkanisierten Käfig zur Armierung des Lagerkörpers und einer das Innenteil mit dem Lagerkörper aufnehmenden Außenhülse. Der Lagerkörper ist vorzugsweise mit dem metallischen Innenteil durch Vulkanisation haftend verbunden. Insoweit soll in diesem Zusammenhang im Hinblick auf die durch das Innenteil und den Lagerkörper mit dem einvulkanisierten Käfig gebildete Einheit auch von einem Gummi-Metall-Teil gesprochen werden, selbst wenn als Material für den Lagerkörper neben Gummi selbstverständlich auch andere elastomere Materialien in Betracht kommen.

Die Außenkontur des Lagerkörpers ist derart gestaltet, dass zwischen ihm und der Außenhülse, in welche das Innenteil und der Lagerkörper eingefügt werden, mindestens zwei Kammern zur Aufnahme eines fluiden Dämpfungsmittels ausgebildet sind. Bezogen auf die Umfangsrichtung des Lagerkörpers sind die Kammern, wie schon ausgeführt, durch in der radialen Richtung vom Innenteil aufragende, aus dem Material des Lagerkörpers bestehende Stege voneinander getrennt. Zur Ausbildung eines hydraulischen Dämpfungssystems sind die Kammern durch einen an oder in dem Lagerkörper angeordneten Dämpfungsmittelkanal miteinander verbunden.

Bei dem erfindungsgemäßen Buchsenlager ist auf das Elastomer des Lagerkörpers über den Käfig eine Vorspannung aufgebracht. Es ist gebräuchlich, eine Vorspannung in dem Elastomer des Lagerkörpers erst nach dessen Montage in der Außenhülse zu erzeugen, indem mittels eines dazu geeigneten Werkzeugs die Außenhülse über ihren Umfang mit einem Druck beaufschlagt und dabei unter Erzeugung der Vorspannung ihr Durchmesser reduziert wird. Bei dem erfindungsgemäßen Lager erfolgt jedoch eine derartige Kalibrierung bereits vor der Montage des Lagerkörpers in der Außenhülse, indem eine entsprechende Druckkraft auf den Käfig ausgeübt wird. Dieser weist dazu gemäß der Erfindung mehrere Bereiche auf, in welchen er von dem Elastomer des Lagerkörpers freigestellt ist. In dem Lagerkörper sind an den betreffenden Stellen Freimachungen ausgebildet. Hierdurch ist es möglich, Druck unmittelbar von Metall (Metall des Werkzeugs) auf Metall (Metall des Käfigs) auf den Käfig aufzubringen und so das Gummi-Metall-Teil vor seiner Montage in der Außenhülse zu kalibrieren. In vorteilhafter Weise wird dadurch vermieden, dass in den erst mit der Montage vervollständigten Kammern für das Dämpfungsmittel ein Überdruck entsteht, welcher die, die Kammern axial begrenzenden Blähwände beansprucht und so die Dauerhaltbarkeit des Lagers verringert.

Gemäß einer möglichen Ausbildungsform sind die schon angesprochenen Freimachungen in den, die Kammern bezüglich der Umfangsrichtung voneinander räumlich trennenden Stegen ausgebildet. Vorzugsweise sind dabei in jedem Steg jeweils zwei im Bereich der axialen Enden des Lagerkörpers angeordnete Freimachungen ausgebildet.

Bei dem erfindungsgemäßen Lager ist der im Bereich der Kammern ausgeschnittene Käfig derart ausgebildet, dass er innerhalb der die Kammern trennenden Stege eine radiale Innenfläche aufweist, welche parallel zur Lagerachse verläuft. Dies hat den Vorteil, dass sich insbesondere auch nach dem Kalibrieren, das heißt nach dem Aufbringen einer Vorspannung auf das Elastomer über den Käfig, die Spannung im Stegbereich gleichmäßig verteilt. Hierdurch wird ebenfalls die Dauerhaltbarkeit des Lagers begünstigt. Bei den aus dem Stand der Technik bekannten Lagern ist hingegen der Käfig im Allgemeinen so ausgebildet, dass er im Bereich der die Kammern trennenden Stege des Lagerkörpers in einem axialen Abschnitt eine zum Innenteil hin gerichtete Taille ausbildet. In diesem taillierten Bereich ist gewöhnlich ein auf dem Umfang des Lagerkörpers angeordneter Kanalträger eingefügt, in welchem der die Kammern miteinander verbindende Dämpfungsmittelkanal ausgebildet ist. Der Kanalträger ist auf den Lagerkörper beispielsweise aufgeclipt oder in der Umfangsrichtung zweigeteilt ausgebildet.

Bei dem erfindungsgemäßen Lager ist der Kanalträger aufgrund des Fehlens einer entsprechenden Taille (die radiale Innenfläche des Käfigs verläuft im Bereich der Stege parallel zur Lagerachse) dahingehend modifiziert, dass er in den Umfangsabschnitten der Stege des Lagerkörpers je eine sich in der Umfangsrichtung erstreckende Ausnehmung aufweist, so dass der Kanal in diesen Bereichen lediglich axial beidseitig durch zwei, die jeweilige Ausnehmung begrenzende Streben des Kanalträgers eingefasst wird, während der dazwischen liegende Kanalboden durch das Elastomer des Lagerkörpers gebildet wird.

Entsprechend weiterer Ausgestaltungen können das Innenteil des erfindungsgemäßen Lagers eine von der Zylinderform abweichende Form aufweisen und axial beidseits der Kammern je ein Radialanschlag ausgebildet sein. Entsprechende Radialanschläge sind dabei beispielsweise durch je einen an den axialen Enden des Lagers auf dessen Innenteil aufgeschoben Kunststoffring ausgebildet.

Ferner wird ein Verfahren zur Herstellung eines entsprechenden elastomeren Buchsenlagers mit einer hydraulischen Dämpfung beschrieben. Gemäß diesem Verfahren ist es vorgesehen, dass beim Einvulkanisieren des Käfigs in den Lagerkörper durch eine entsprechende Gestaltung der dazu verwendeten Form an dem Käfig mehrere vom Elastomer des Lagerkörpers freigestellte Bereiche ausgebildet werden. Im Fortgang des Verfahrens wird auf diese Bereiche vor dem Einfügen des aus dem Innenteil und dem einvulkanisierten Käfig bestehenden Gummi-Metall-Teils in die Außenhülse mittels eines Werkzeugs Druck ausgeübt und dabei der Durchmesser des Käfigs unter Ausbildung einer Vorspannung im Elastomer des Lagerkörpers reduziert. Soweit vorstehend und auch im Zusammenhang mit der Erläuterung des Lagers davon gesprochen wird, dass die entsprechenden Bereiche, über welche mittels des der Kalibrierung dienenden Werkzeugs die vorgesehene Druckkraft aufgebracht wird, von dem Elastomer des Lagerkörpers freigestellt sind, meint dies, dass diese Bereiche des Käfigs nicht mit einer Gummischicht bedeckt sind, welche zur radialen Dämpfung des Lagers beiträgt. Dies schließt nicht aus, dass die betreffenden Bereiche durch eine dünne, fertigungsbedingte, aber zu vernachlässigende Gummihaut (mit einer Stärke von wenigen m) bedeckt sind.

Das Verfahren ist vorteilhaft dadurch weitergebildet, dass neben den der eigentlichen Kalibrierung dienenden freigestellten Bereichen des Kanalträgers punktuell weitere Bereiche des Käfigs freigestellt werden, welche zur Positionierung des Kalibrierungswerkzeugs dienen. Entsprechend einer praxisgerechten Durchführung des Verfahrens erfolgt die Montage des bereits kalibrierten Gummi-Metall-Teils in der Außenhülse unter Flüssigkeit, das heißt in einem das Dämpfungsmittel enthaltenden Bad.

Die Erfindung soll nachfolgend anhand eines Ausführungsbeispiels nochmals näher erläutert werden. In den zugehörigen Zeichnungen zeigen:
- Fig. 1:: eine mögliche Ausbildungsform des erfindungsgemäßen Lagers in räumlicher Darstellung,
- Fig. 2:: das Lager gemäß Fig. 1 in einer teilweise geschnittenen Darstellung,
- Fig. 3:: ein mit dem Lager gemäß Fig. 1 beziehungsweise Fig. 2 vergleichbares Lager nach dem Stand der Technik.

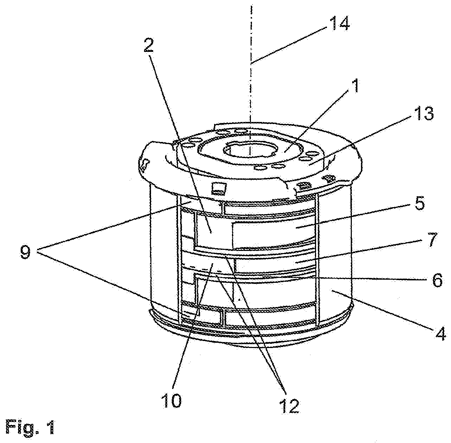

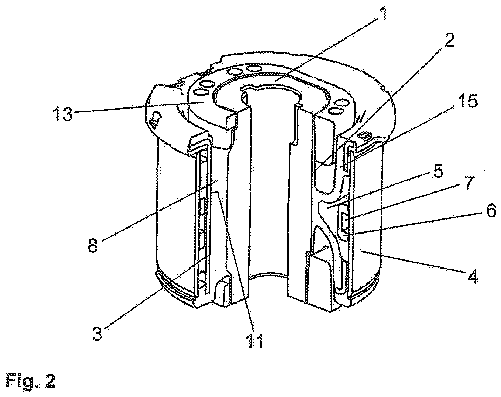

Die Fig. 1 zeigt eine mögliche Ausbildungsform des erfindungsgemäßen Lagers, welche beispielsweise für den Einsatz als hydraulisches Achsträgerlager vorgesehen ist. Das in einer räumlichen Darstellung gezeigte elastomere Buchsenlager besteht im Wesentlichen aus dem metallischen, annähernd zylinderförmigen Innenteil 1, dem das Innenteil 1 konzentrisch umgebenden elastomeren Lagerkörper 2 beziehungsweise Gummikörper, welcher mit dem Innenteil 1 durch Vulkanisation verbunden ist, dem in den Lagerkörper 2 einvulkanisierten Käfig 3 (besser in der Fig. 2 erkennbar) und einer das Innenteil 1 mit dem Lagerkörper 2 und dem darin einvulkanisierten Käfig 3 aufnehmenden Außenhülse 4. Der Käfig 3 ist in der Darstellung der Fig. 1, da er, wie ausgeführt, in den Lagerkörper 2 einvulkanisiert ist, kaum zu erkennen. Er ist in dieser Darstellung lediglich insoweit zu erkennen, als dass der elastomere Lagerkörper 2 des Lagers erfindungsgemäß mehrere Freimachungen 9 aufweist, in deren Bereich der Käfig 3 von dem Elastomer des Lagerkörpers 2 freigestellt ist. Zur Realisierung des hydraulischen Dämpfungssystems sind in dem Lagerkörper 2 zwei Kammern 5 zur Aufnahme eines fluiden Dämpfungsmittels ausgebildet, von denen eine in der Fig. 2 wiederum besser erkennbar ist. Die Kammern 5 sind, bezogen auf den Lagerumfang, durch von dem Lagerkörper 2 ausgebildete elastomere Stege 8 voneinander räumlich getrennt, jedoch durch einen Dämpfungsmittelkanal 7 miteinander verbunden, über welchen das Dämpfungsmittel bei entsprechender radialer Belastung von einer Kammer 5 in die jeweils andere verdrängt werden kann. In der axialen Richtung a werden die Kammern 5 durch die Blähwände 15 begrenzt. Der Kanal 7 ist in einem auf dem Außenumfang des Lagerkörpers 2 angeordneten Kanalträger 6 aus Kunststoff ausgebildet. Das aus dem Innenteil 1 und dem Lagerkörper 2 mit dem darin einvulkanisierten Käfig 3 gebildete Gummi-Metall-Teil ist erfindungsgemäß vor seiner Montage in der Außenhülse 4 kalibriert worden. Dazu ist mit einem geeigneten Werkzeug im Bereich der Freimachungen 9 ein Druck auf den Käfig 3 ausgeübt worden, in dessen Ergebnis sich der Durchmesser beziehungsweise Krümmungsradius des Käfigs 3 unter Ausbildung einer Vorspannung in dem Elastomer des Lagerkörpers 2 verringert hat. Dadurch, dass das Innenteil 1 und der Lagerkörper 2 erst nach diesem Kalibriervorgang unter Flüssigkeit, das heißt in einem Dämpfungsmittelbad, in die Außenhülse 4 eingefügt und erst dabei die Kammern 5 komplettiert werden, ergibt sich der Vorteil, dass eine Vorspannung des Elastomers ohne einen die Dauerhaltbarkeit herabsetzenden Druckaufbau in den Kammern 5 erreicht wird. Um die Vorspannung im Bereich der Stege 8 möglichst gleichmäßig in dem Elastomer zu verteilen, ist bei der dargestellten Ausbildungsform zusätzlich der Käfig 3 modifiziert worden. Die Vorspannung im Elastomer bewirkt, dass die gewünschten Wege/Belastungen insbesondere in der Fahrkomfort bestimmenden Hochrichtung realisiert werden können. Mit Lagern nach dem Stand der Technik können die heutigen Anforderungen bezüglich des Fahrkomforts beziehungsweise der Fahrdynamik und gleichzeitig der Dauerhaltbarkeit nicht umgesetzt werden.

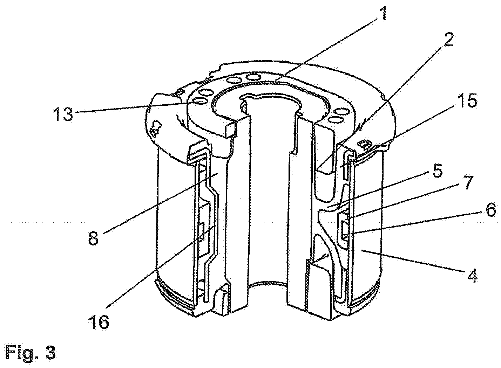

Die Figuren 2 und 3 ermöglichen einen Vergleich, durch welchen diese Modifizierung der Käfigform ersichtlich ist. Dabei zeigt die Fig. 2 das erfindungsgemäße Lager gemäß der Fig. 1 mit dem entsprechend modifizierten Käfig 3 in einer teilweise geschnittenen Darstellung, während die Fig. 3 ein vergleichbares Lager nach dem Stand der Technik in ebenfalls teilweise geschnittener Darstellung zeigt. Nach dem Stand der Technik ist es, wie aus der Fig. 3 ersichtlich, üblich, den Käfig 3 im Bereich der Stege 8 zu taillieren und in die entstehende Taille 16 den Kanalträger 6 einzufügen. Bei der dargestellten Ausbildungsform des erfindungsgemäßen Lagers wurde jedoch, wie aus der Fig. 2 ersichtlich, auf die Ausbildung einer solchen Taille 16 verzichtet. Vielmehr verläuft die radiale Innenfläche 11 des Käfigs 3 bei der Ausbildungsform nach der Fig. 2 im Bereich der Stege 8 des Lagerkörpers 2 bezüglich der axialen Richtung a parallel zur Lagerachse 14. Hierdurch wird ein gleichmäßiger Eintrag der Vorspannung im Bereich der Stege 8 erreicht.

In Anpassung an den in der beschriebenen Weise modifizierten Käfig 3 ist bei der beispielhaft gezeigten und erläuterten Ausbildungsform des erfindungsgemäßen Lagers außerdem der Kanalträger 6 verändert worden. Wie aus der Fig. 1 ersichtlich, weist dabei der Kanalträger 6 im Bereich der Stege 8 jeweils eine in Umfangsrichtung u verlaufende Ausnehmung 10 auf. Der Kanal wird folglich in diesem Bereich in der axialen Richtung a jeweils durch zwei, die betreffende Ausnehmung 10 in dem Kanalträger 6 begrenzende Streben 12 sowie in der radialen Richtung r durch das Elastomer des betreffenden Steges 8 und die Außenhülse 4 eingefasst. Der Kanalboden ist somit in diesem Bereich, abweichend vom Stand der Technik, durch das Elastomer des Lagerkörpers 2 gebildet.

Bei seiner bestimmungsgemäßen Verwendung als Achsträgerlager wird das in Fig. 1 und 2 gezeigte Lager derart verbaut, dass die Lagerachse 14 in der Fahrzeughochrichtung angeordnet ist. In dieser Hochrichtung werden vom Fahrwerk auf den Fahrzeugaufbau übertragene Schwingungen gedämpft. Gleichzeitig verläuft die über die Kammern 5 gegebene radiale Hauptbelastungsrichtung des Lagers parallel zur Fahrzeuglängsachse (man spricht insoweit von der Längsrichtung), während seine andere radiale Hauptbelastungsrichtung quer zur Fahrzeuglängsachse (man spricht von der Querrichtung) verläuft. Mit der Erfindung lassen sich Federratenverhältnisse von bis ca. 13 : 1 (Quer- zu Hochrichtung) und bis etwa 9 : 1 (Quer- zu Längsrichtung) erreichen. Zum Schutz vor einer Überbeanspruchung des Lagers in der Längsrichtung, also bezüglich großer radial über die Kammern 5 in das Lager eingetragener Kräfte, ist auf beide axiale Enden des Innenteils je ein Kunststoffring aufgeschoben, durch welche Radialanschläge 13 zur Begrenzung des radialen Federwegs ausgebildet sind.

### Bezugszeichenliste

- 1: Innenteil
- 2: Lagerkörper
- 3: Käfig
- 4: Außenhülse
- 5: Kammer
- 6: Kanalträger
- 7: Dämpfungsmittelkanal
- 8: Steg
- 9: Freimachung, freigestellter Bereich
- 10: Ausnehmung
- 11: Innenfläche
- 12: Strebe
- 13: Radialanschlag
- 14: Lagerachse
- 15: Blähwand
- 16: Taille

## Patentansprüche

1. Elastomeres Buchsenlager mit hydraulischer Dämpfung, bestehend aus einem metallischen Innenteil (1), einem das Innenteil (1) umgebenden elastomeren Lagerkörper (2) mit einem darin einvulkanisierten Käfig (3) und einer das Innenteil (1) mit dem Lagerkörper (2) aufnehmenden Außenhülse (4), wobei aufgrund der Außenkontur das Lagerkörpers (2) zwischen diesem und der Außenhülse (4) mindestens zwei Kammern (5) zur Aufnahme eines fluiden Dämpfungsmittels ausgebildet sind, welche in der Umfangsrichtung (u) des Lagers durch zwischen ihnen ausgebildete, vom Innenteil (1) gegen die Außenhülse (4) aufragende Stege (8) räumlich getrennt und durch mindestens einen an oder in dem Lagerkörper (2) ausgebildeten Dämpfungsmittelkanal (7) miteinander verbunden sind, wobei auf das Elastomer des Lagerkörpers (2) über den Käfig (3) eine Vorspannung aufgebracht ist, wobei der Lagerkörper (2) Freimachungen (9) aufweist, an denen Bereiche des Käfigs (3) von dem Elastomer des Lagerkörpers (2) freigestellt sind, und wobei die radiale Innenfläche (11) des im Bereich der Kammern (5) ausgeschnittenen Käfigs (3) im Innern der Stege (8) parallel zur Längsachse (14) des Lagers verläuft, **dadurch gekennzeichnet, dass** der die Kammern (5) miteinander verbindende Dämpfungsmittelkanal (7) in einem auf dem Umfang des Lagerkörpers (2) angeordneten Kanalträger (6) ausgebildet ist, welcher im Bereich jedes der Stege (8) eine sich in der Umfangsrichtung (u) jeweils über den gesamten Steg (8) erstreckende Ausnehmung (10) aufweist, so dass der Kanal (7) im Bereich der Stege (8) in axialer Richtung (a) durch zwei die jeweilige Ausnehmung (10) begrenzende Streben (12) und in der radialen Richtung (r) durch das Elastomer des betreffenden Stegs (8) und die Außenhülse (4) eingefasst ist.

2. Elastomeres Buchsenlager nach Anspruch 1, **dadurch gekennzeichnet, dass** die Freimachungen (9) in den, die Kammern (5) bezüglich der Umfangsrichtung (u) voneinander trennenden Stegen (8) ausgebildet sind.

3. Elastomeres Buchsenlager nach Anspruch 2, **dadurch gekennzeichnet, dass** in jedem Steg (8) jeweils zwei im Bereich der axialen Enden des Lagerkörpers angeordnete Freimachungen (9) ausgebildet sind.

4. Elastomeres Buchsenlager nach einem der Ansprüche 1 bis 3, **dadurch gekennzeichnet, dass** das Innenteil (1) eine von der Zylinderform abweichende Form aufweist.

5. Elastomeres Buchsenlager nach einem der Ansprüche 1 bis 4, **dadurch gekennzeichnet, dass** axial beidseits der Kammern (5) je ein Radialanschlag (13) ausgebildet ist.

6. Elastomeres Buchsenlager nach Anspruch 5, **dadurch gekennzeichnet, dass** die Radialanschläge (13) durch je einen an den axialen Enden des Lagers auf dessen Innenteil (1) aufgeschoben Kunststoffring gebildet sind.

## Claims

1. Elastomer bush bearing having hydraulic damping, comprising a metal inner portion (1), an elastomer bearing member (2) which surrounds the inner portion (1) and which has a cage (3) vulcanised therein and an outer sleeve (4) which receives the inner portion (1) with the bearing member (2), wherein as a result of the outer contour of the bearing member (2) there are formed between the bearing member and the outer sleeve (4) at least two chambers (5) which are for receiving a fluid damping medium and which in the peripheral direction (u) of the bearing are spatially separated by means of webs (8) which are formed between them and which protrude from the inner portion (1) against the outer sleeve (4) and which are connected to each other by means of at least one damping medium channel (7) which is formed on or in the bearing member (2), wherein a pretensioning is applied to the elastomer of the bearing member (2) via the cage (3), wherein the bearing member (2) has cut-away portions (9), on which regions of the cage (3) are released from the elastomer material of the bearing member (2), and wherein the radial inner face (11) of the cage (3) which has been cut out in the region of the chambers (5) extends inside the webs (8) parallel with the longitudinal axis (14) of the bearing, **characterised in that** the damping medium channel (7) which connects the chambers (5) to each other is formed in a channel carrier (6) which is arranged on the periphery of the bearing member (2) and which in the region of each of the webs (8) has a recess (10) which extends in the peripheral direction (u) in each case over the entire web (8) so that the channel (7) in the region of the webs (8) is bounded in an axial direction (a) by means of two struts (12) which delimit the respective recess (10) and in the radial direction (r) by means of the elastomer material of the respective web (8) and the outer sleeve (4).

2. Elastomer bush bearing according to Claim 1, **characterised in that** the cut-away portions (9) are formed in the webs (8) which separate the chambers (5) from each other with respect to the peripheral direction (u) .

3. Elastomer bush bearing according to Claim 2, **characterised in that** in each case two cut-away portions (9) which are arranged in the region of the axial ends of the bearing member are formed in each web (8).

4. Elastomer bush bearing according to any one of Claims 1 to 3, **characterised in that** the inner portion (1) has a shape which differs from the cylindrical shape.

5. Elastomer bush bearing according to any one of Claims 1 to 4, **characterised in that** axially at both sides of the chambers (5) a radial stop (13) is formed.

6. Elastomer bush bearing according to Claim 5, **characterised in that** the radial stops (13) are formed by means of a plastics material ring which is in each case fitted on the axial ends of the bearing on the inner portion (1) thereof.

## Revendications

1. Palier à douille avec un amortissement hydraulique, constitué d'une partie interne métallique (1), d'un corps de palier élastomère (2) entourant la partie interne (1), avec une cage (3) vulcanisée à l'intérieur de celui-ci et un manchon externe (4) logeant la partie interne (1) avec le corps de palier (2), moyennant quoi, du fait du contour externe, le corps de palier (2), entre celui-ci et le manchon externe (4), sont réalisées au moins deux chambres (5) pour le logement d'un fluide d'amortissement, qui sont séparées physiquement dans la direction circonférentielle (u) du palier par des nervures (8) s'élevant à partir de la partie interne (1) contre le manchon externe (4) et reliées entre elles par l'intermédiaire d'au moins un canal de fluide d'amortissement (7) réalisé sur ou dans le corps de palier (2), une précontrainte étant appliquée sur l'élastomère du corps de palier (2) par l'intermédiaire de la cage (3), le corps de palier (2) comprenant des dégagements (9), sur lesquels des zones de la cage (3) sont dégagées de l'élastomère du corps de palier (2) et la surface interne radiale (11) de la cage (3) découpée au niveau des chambres (5) s'étendant à l'intérieur des nervures (8) parallèlement à l'axe longitudinal (14) du palier, **caractérisé en ce que** le canal de fluide d'amortissement (7) reliant les chambres (5) entre elles est réalisé dans un support de canal (6), disposé sur la circonférence du corps de palier (2), qui comprend un évidement (10) s'étendant dans la direction circonférentielle (u) sur toute la nervure (8), de façon à ce que le canal (7) soit entouré, au niveau des nervures (8), dans la direction axiale (a), par deux entretoises (12) limitant l'évidement (10) et dans la direction radiale (r) par l'élastomère de la nervure (8) correspondante et le manchon externe (4).

2. Palier à douille en élastomère selon la revendication 1, **caractérisé en ce que** les dégagements (9) sont réalisés dans les nervures (8) séparant entre elles les chambres (5) par rapport à la direction circonférentielle (u).

3. Palier à douille en élastomère selon la revendication 2, **caractérisé en ce que**, dans chaque nervure (8) sont réalisés des dégagements (9) disposés au niveau des extrémités axiales du corps de palier.

4. Palier à douille en élastomère selon l'une des revendications 1 à 3, **caractérisé en ce que** la partie interne (1) présente une forme différente de la forme cylindrique.

5. Palier à douille en élastomère selon l'une des revendications 1 à 4, **caractérisé en ce qu'**une butée radiale (13) est réalisée axialement sur chacun des deux côtés de la chambre (5).

6. Palier à douille en élastomère selon la revendication 5, **caractérisé en ce que** les butées radiales (13) sont constituées par une bague en matière plastique glissée sur les extrémités axiales du palier sur sa partie interne (1).
